# FASCICULE DE BREVET EUROPEEN

(11) **EP 3 428 740 B1**
(45) Date de publication et mention de la délivrance du brevet: **02.09.2020**
(21) Numéro de dépôt: 17181525.1
(22) Date de dépôt: 14.07.2017
(51) Int. Cl.: G04B 37/02

(54) **SOUPAPE DE SÉCURITÉ POUR MONTRE**
SICHERHEITSVENTIL FÜR ARMBANDUHR
SAFETY VALVE FOR A WATCH

(43) Date de publication de la demande: 16.01.2019
(73) Titulaire: The Swatch Group Research and Development Ltd, 2074 Marin (CH)
(72) Inventeur: Vuille, Pierry, 2338 Les Emibois (CH); Willemin, Michel, 2515 Prêles (CH); Martin, Jean-Claude, 2037 Montmollin (CH)
(74) Mandataire: ICB SA

(56) Documents cités:
- EP-A1- 0 554 797
- EP-A1- 0 884 660
- DE-U- 1 678 780
- FR-A1- 2 406 143

## Description

### Domaine technique

La présente invention se rapporte à une soupape de sécurité pour une montre et plus précisément pour une montre destinée à la plongée sous-marine. La présente invention se rapporte également à la montre munie de ladite soupape.

### Arrière-plan technologique

Les soupapes à hélium, aussi appelées valves à hélium, sont présentes sur certaines montres de plongée pour évacuer l'hélium infiltré dans la boîte de montre lors de plongées dites à saturation où les plongeurs respirent un mélange gazeux contenant de l'hélium et de l'oxygène. Cela leur permet de rester plusieurs jours à l'intérieur d'une cloche ou d'une station sous-marine. Durant ce laps de temps, l'hélium peut s'infiltrer dans la montre. En l'absence d'une telle soupape, la surpression intérieure générée par l'hélium infiltré peut lors de la phase de décompression générer des dégâts à la montre, comme par exemple la perte du verre qui se déchasse ou se brise.

Les soupapes à hélium peuvent être manuelles ou automatiques. Les soupapes manuelles fonctionnent simplement en serrant un élément d'étanchéité comme une tête, à la façon d'une couronne vissée, sur la carrure. Les soupapes manuelles ont pour désavantage que la montre n'est pas étanche si la soupape n'est pas resserrée après usage. Les soupapes automatiques se déclenchent automatiquement, comme leur nom l'indique, lorsque la différence de pression entre l'intérieur de la boîte de montre et l'environnement extérieur atteint un seuil critique. Un premier type de soupape automatique est celle sans blocage possible par l'utilisateur dont les fondements sont décrits dans le document CH 492 246. Celle-ci montée dans la majorité des cas à fleur de la carrure se présente sous forme d'une simple soupape limitant la pression à l'intérieur du boîtier de montre. L'inconvénient de ce type de soupape est son ouverture automatique sans possibilité de bloquer l'échappement de gaz et donc aussi l'entrée de fluide dans la montre, ce qui est problématique lorsque la décompression s'effectue en milieu humide. Pour pallier cet inconvénient, il existe un deuxième type de soupape automatique qui peut être commandée par l'utilisateur via le vissage/dévissage de la tête induisant un déplacement axial de cette dernière comme décrit dans le document EP 0 554 797. Eventuellement, ce deuxième type de soupape peut être intégré à un poussoir comme divulgué dans le document EP 2 685 327.

La soupape du document EP 0554 797 comporte une tête évidée munie d'une jupe et d'un noyau central prolongé par une tige. La tête peut être vissée sur un tube fixé à la carrure faisant partie de la boîte de la pièce d'horlogerie. Le tube comprend un fond traversé avec jeu par la tige. Le noyau et la tige sont entourés par un ressort de rappel à boudin. Le ressort prend appui sous la tête par sa première extrémité. La seconde extrémité du ressort prend appui sur une bague qui comprime à son tour un premier joint d'étanchéité disposé sur le fond du tube. Un second joint d'étanchéité est disposé sous la tête au droit du tube. Lorsque la tête est vissée sur la partie filetée du tube, le second joint est pressé contre le tube. Dès lors, la soupape est inopérante et complètement étanche grâce au second joint et à l'effet du ressort sur le premier joint. Lorsque la tête est dévissée, le second joint sous la tête n'est plus actif et le joint au fond du tube est susceptible de se soulever contre la force de rappel du ressort quand la pression régnant à l'intérieur de la boîte devient plus élevée que celle régnant à l'extérieur. Il s'ensuit l'évacuation du gaz depuis l'intérieur de la montre vers l'extérieur.

Ce deuxième type de soupape présente pour désavantage que la tête est montée sur le tube via un pas de vis. La tête étant principalement sur sa durée de vie en position de repos, c.à.d. en position vissée, il y a un risque que l'utilisateur ne soit plus en mesure de la desserrer le moment venu. Aussi, un serrage trop important de la tête sur le tube risque à la longue d'endommager le second joint positionné sous la tête. Inversement, un serrage trop faible de la tête risque de la maintenir en position ouverte.

Le document EP0884660décrit une soupape avec couronne, une tige montée solidaire de la couronne et un tube inséré dans la boîte de montre.

Le document FR 2 406 143 divulgue une soupape qui permet la fuite d'un gaz grâce à un alignement rotationnel de deux éléments axiaux.

### Résumé de l'invention

Pour remédier aux désavantages précités, la présente invention a pour objet principal de proposer une nouvelle soupape à hélium qui présente les avantages d'une soupape automatique avec intervention de l'utilisateur tout en s'affranchissant de l'utilisation d'un pas de vis pour la liaison entre la tête et le tube.

A cet effet, la présente invention propose une soupape conforme à la revendication 1.

De préférence la soupape comporte une tête montée en rotation pure autour du tube, c.à.d. sans déplacement axial de la tête via un pas de vis. La tête est apte à se déplacer entre une position ouverte où le gaz est susceptible de s'échapper hors de la boîte en cas de surpression et une position fermée où l'échappement du gaz est empêché. Plus précisément, la présente invention se rapporte à une soupape comprenant un premier élément fixe et un second élément mobile dont le déplacement est lié au déplacement angulaire de la tête. Les deux éléments sont chacun pourvus d'un ou plusieurs orifices ou évidements. Selon l'invention, le mouvement relatif entre les deux éléments permet de mettre en communication fluidique les orifices de chaque élément lorsqu'un échappement de gaz est souhaité ou inversement de bloquer l'échappement de gaz en évitant de mettre en regard les orifices de chaque élément.

D'autres avantages ressortiront des caractéristiques exprimées dans les revendications, de la description détaillée de l'invention illustrée ci-après à l'aide des dessins annexés donnés à titre d'exemples nullement limitatifs.

### Brève description des figures

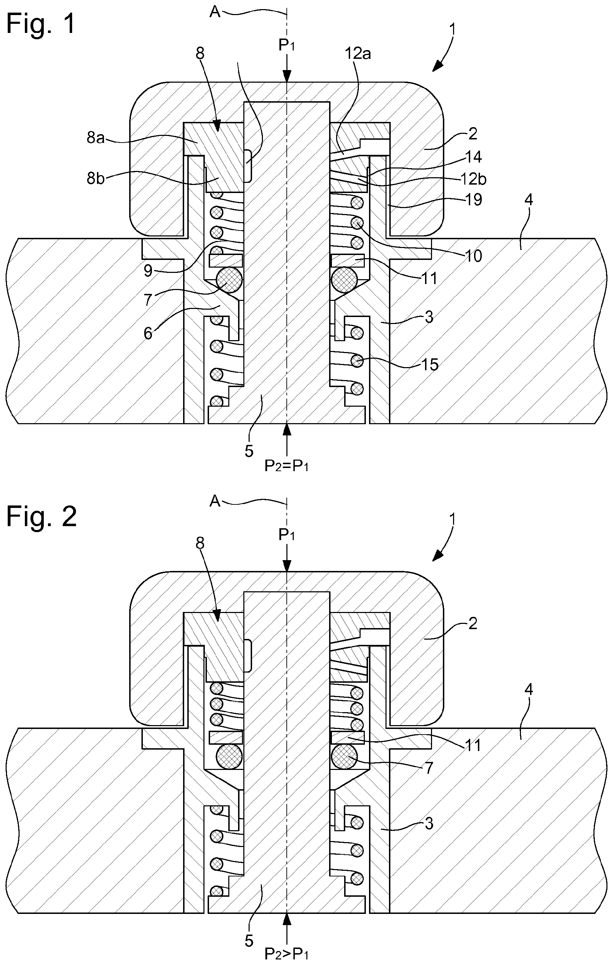

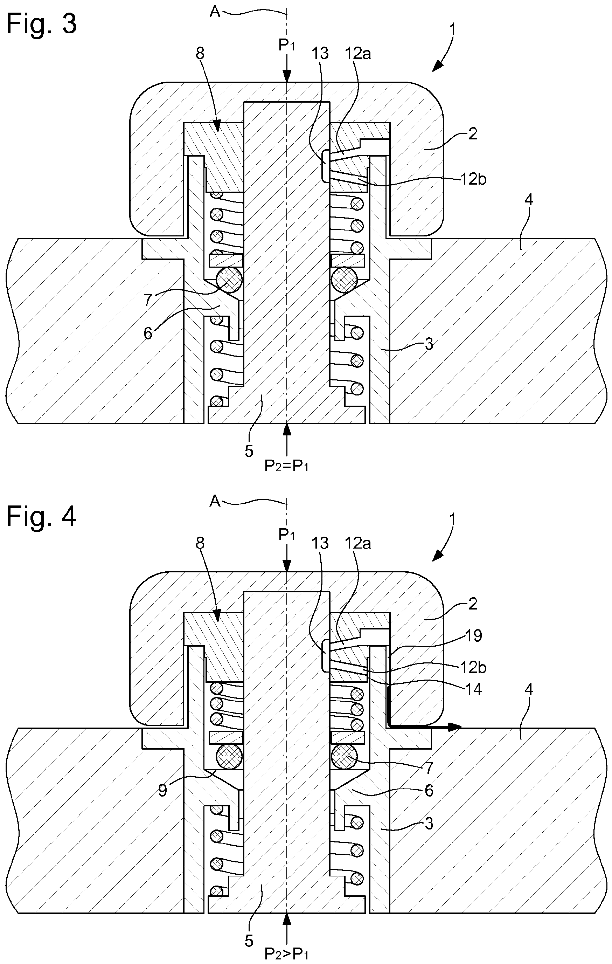

Les figures 1 à 4 sont des vues en coupe de la soupape à hélium selon l'invention fixée à une boîte de montre. Aux figures 1 et 2, la tête est en position fermée avec respectivement à la figure 1 une pression sensiblement égale entre l'intérieur et l'extérieur de la boîte de montre et à la figure 2 une surpression à l'intérieur de la boîte de montre. Aux figures 3 et 4, la tête est en position ouverte avec, à la figure 4, une différence de pression entre l'intérieur et l'extérieur de la boîte de montre entraînant l'échappement du gaz vers l'extérieur de la boîte de montre.

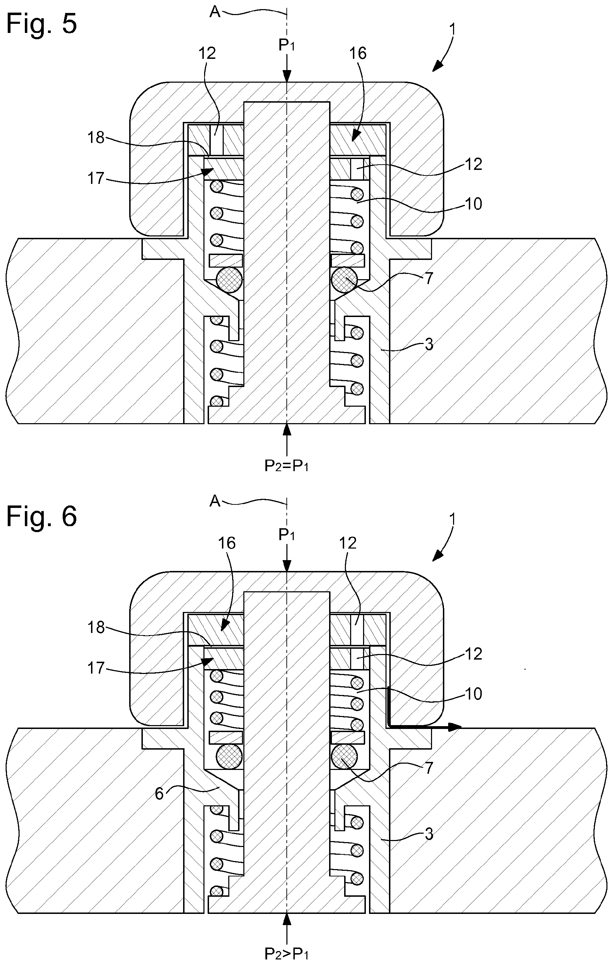

Les figures 5 et 6 représentent une variante de la soupape à hélium des figures 1 à 4. A la figure 5, la soupape est en position fermée avec une pression intérieure et une pression extérieure à la boîte de montre sensiblement égale. A la figure 6, la soupape est en position ouverte avec une surpression au sein de la boîte entraînant l'échappement du gaz vers l'extérieur de la boîte de montre.

### Description détaillée de l'invention

La présente invention se rapporte à une soupape à hélium, qu'on qualifiera aussi de soupape de sécurité.

La soupape 1 représentée entre autres aux figures 1 et 5 comporte une tête cylindrique creuse 2 montée sur un tube 3 s'étendant le long d'une axe A, le tube 3 étant destiné à être fixé à la boîte de montre 4 par exemple par vissage. La soupape 1 comporte une tige 5 solidaire de la tête 2 qui s'étend à l'intérieur du volume délimité par la tête creuse 2 et par le tube 3 et traverse une portée 6 disposée dans la partie inférieure de la soupape. La tête 2 est montée mobile en rotation autour du tube 3 entre une position ouverte où le gaz est susceptible de s'échapper en dehors de la boîte de montre et une position fermée où l'échappement de gaz est empêché. Les positions ouverte et fermée sont respectivement représentées aux figures 3 (ainsi que 4 et 6) et 1 (ainsi que 2 et 5).

Comme représenté à la figure 1, la soupape 1 présente une double étanchéité avec, d'une part, un joint 7 disposé au sein du tube 3 contre la portée 6, et, d'autre part, une matière en polymères 8 remplissant le volume intérieur de la soupape dans sa partie supérieure. La matière en polymères 8 de forme annulaire remplit un espace (matière 8a) délimité par la paroi intérieure de la tête creuse 2, l'extrémité supérieure du tube 3 et la tige 5 et peut s'étendre en partie au sein du tube 3 dans l'espace (matière 8b) délimité par la paroi intérieure du tube 3 et par la tige 5.

La soupape 1 comporte au sein du tube 3 dans une chambre 9 un ressort 10 enroulé autour de la tige 5 et prenant appui à une extrémité sur la matière en polymères 8 et à l'autre extrémité sur une bague 11 qui comprime le joint 7 contre la portée 6 lorsque la pression intérieure P2 et la pression extérieure P1 sont sensiblement égales ou encore que P1 est supérieure à P2, par exemple sous l'eau.

Selon l'invention, la matière en polymères 8 comporte au moins un orifice 12 débouchant s'étendant sur l'épaisseur de la matière annulaire entre la tige 5 et la paroi intérieure du tube 3 ou de la tête creuse 2. Dans la configuration de la figure 1, la matière en polymères 8 comporte deux orifices débouchants 12a et 12b disposés de manière non jointive à des niveaux différents dans la matière. Un premier orifice 12a traverse la matière 8a et un deuxième orifice 12b traverse la matière 8b.

La tige 5 comporte sur une portion de sa circonférence un évidement 13 destiné à mettre en communication les deux orifices débouchants 12a et12b lorsque l'évidement 13 est disposé en vis-à-vis desdits orifices 12a, 12b (figure 3).

Selon l'invention, un chemin 14 est ménagé entre la matière en polymères 8b et la paroi intérieure du tube 3 pour permettre l'écoulement du gaz depuis la chambre 9 vers le second orifice 12b.

Dans l'exemple illustré, la soupape 1 comporte un autre ressort 15 disposé autour de la tige 5 en dessous de la portée 6 en direction de la base de la tige. Ce ressort a pour fonction d'appliquer une force de rappel sur la tête afin d'empêcher tout déplacement axial de cette dernière. D'autres moyens non élastiques tels qu'une butée à billes, etc. pourraient être envisagés pour remplir cette fonction. En outre, selon l'invention, le déplacement angulaire autour de l'axe A de la tête entre les positions ouverte et fermée pourrait être limité par une butée (non représentée).

La matière polymère est réalisée suffisamment élastique pour remplir sa fonction d'étanchéité sur le long terme après avoir été sollicitée à plusieurs reprises en compression par le ressort. Par exemple, le choix du matériau peut se porter sur des polyuréthanes, en particulier sur l'Asutane® (matière de la Division Polymers de Swatch Group R&D), sur des élastomères (NBR ou autres), des thermoplastiques (PEEK, PA ou autres), des thermodurcissables ou autres composites, par exemple chargés en fibres ou en nanoparticules (par exemple de carbone, de cellulose, etc.).. Selon l'invention, le cylindre de matière en polymères peut être chassé dans le tube et la tige chassée dans le cylindre.

Les figures 1 à 4 illustrent le fonctionnement de la soupape selon l'invention. Aux figures 1 et 2, la tête 2 est en position fermée, c.à.d. que les deux orifices 12a, 12b ne sont pas en regard de l'évidement 13 ménagé dans la tige 5. En l'absence d'une différence de pression entre l'intérieur de la boîte de montre (pression P2) et l'environnement extérieur (pression P1=P2), le joint 7 est comprimé contre la portée 6 et la soupape est complètement étanche (figure 1). En présence d'une surpression à l'intérieur de la boîte de montre (P2>P1), le joint 7 n'est plus actif sous l'action de la pression d'hélium soulevant ce dernier (figure 2). Néanmoins, l'étanchéité de la soupape est garantie par la matière en polymères 8.

La rotation de la tête autour de l'axe A d'un angle donné inférieur à 360°, qui est de 180° dans l'exemple illustré aux figures 3 et 4, place la tête en position ouverte. En position ouverte, l'évidement 13 est disposé en vis-à-vis d'une extrémité des orifices 12a, 12b pour mettre en communication fluidique l'intérieur et l'extérieur de la boîte. Si la pression interne est égale à la pression externe (P2=P1), le joint 7 reste comprimé contre la portée d'appui 6 et dès lors la soupape reste étanche (figure 3). Par contre, lorsque la pression interne dépasse la pression externe (P2>P1) d'une valeur prédéfinie suffisante pour contrer la force de rappel du ressort 10, le joint 7 devient également inopérant, ce qui permet l'échappement du gaz à l'extérieur de la boîte de montre pour équilibrer les pressions (figure 4). Le gaz s'écoule depuis la base de la soupape par les jeux entre le tube 3 et la tige 5 et traverse successivement la chambre 9, le chemin 14, le second orifice 12b, l'évidement 13, le premier orifice 12a, et l'interstice 19 entre la paroi extérieure du tube 3 et la paroi intérieure de la tête 2 pour être finalement libéré à l'extérieur de la boîte de montre 4.

D'autres configurations de la soupape selon l'invention peuvent être envisagées. Par exemple, il est possible de pratiquer un seul orifice débouchant dans la matière en polymères et de ménager un évidement dans la tige mettant directement en communication la chambre comprenant le ressort et l'orifice débouchant lorsque la tête est en position ouverte. Plusieurs configurations sont ainsi possibles sans sortir du cadre de l'invention.

A cet égard, les figures 5 et 6 présentent une variante de la soupape 1 selon l'invention basée sur un même de principe de mise en regard d'orifices suite à la rotation de la tête de la soupape. Dans cette variante, un premier disque 16, par exemple en céramique, muni d'un ou plusieurs orifices 12 est disposé sous la tête 2 et solidaire de la tige 5. En dessous de ce premier disque 16, un deuxième disque 17, par exemple en céramique, fixe et solidaire du tube 3 est disposé. Ce deuxième disque 17 est également muni d'un ou plusieurs orifices 12 destinés à se positionner en vis-à-vis de ceux du premier disque 16 après déplacement de la tête 2 vers sa position ouverte. Dans l'exemple illustré, les orifices 12 traversent l'épaisseur de chaque disque 16,17 et permettent un échappement du gaz via un interstice entre la tête 2 et le premier disque 16. D'autres configurations non représentées sont envisageables avec, par exemple, un orifice coudé traversant le premier disque et permettant un échappement latéral du gaz dans l'interstice entre la paroi extérieure du tube et la paroi intérieure de la tête creuse. De même le premier disque solidaire de la tige pourrait être positionné en dessous du second disque fixe. De préférence, une membrane poreuse 18 telle qu'une membrane en Gore-Tex®, est disposée entre les deux disques 16,17 pour assurer une étanchéité à l'eau de la soupape même lorsque la tête est en position ouverte.

### Légende

- (1): Soupape
- (2): Tête
- (3): Tube
- (4): Boîte de montre
- (5): Tige
- (6): Portée
- (7): Joint
- (8): Matière polymérique
(a) Matière polymérique dans un premier espace
(b) Matière polymérique dans un deuxième espace
- (9): Chambre
- (10): Ressort
- (11): Bague
- (12): Orifice
(a) Premier
(b) Second
- (13): Evidement dans la tige
- (14): Chemin
- (15): Autre ressort
- (16): Premier disque
- (17): Second disque
- (18): Membrane
- (19): Interstice

## Revendications

1. Soupape de sécurité (1) comprenant :
- un tube (3) destiné à être fixé à une boîte de montre (4),
- une tête évidée (2) montée mobile en rotation autour du tube (3) et munie d'une tige (5) s'étendant dans sa partie évidée,
- un premier élément (8 ;16) monté fixe par rapport à la tête (2) et
- un second élément (5 ; 17) solidaire de la tête (2) et mobile par rapport au premier élément,
**caractérisée en ce que** le premier élément et le second élément comportent chacun un ou plusieurs passages (12,13) permettant l'écoulement d'un gaz, le mouvement en rotation de la tête (2) permettant de mettre en communication les passages (12,13) du premier élément et du second élément pour l'échappement du gaz depuis l'intérieur vers l'extérieur de la boîte en cas de surpression à l'intérieur de la boîte (4) ou inversement permettant de désaligner les passages (12,13) du premier élément et du second élément pour empêcher l'échappement du gaz.

2. Soupape (1) selon la revendication 1, **caractérisée en ce que** le premier élément est une matière en polymères (8) disposée à l'intérieur de la tête évidée (2) et **en ce que** le second élément est la tige (5).

3. Soupape (1) selon la revendication 2, **caractérisée en ce que** la matière en polymères (8) remplit un premier espace (8a) compris entre une extrémité du tube (3), la tête (2) et la tige (5).

4. Soupape (1) selon la revendication 2 ou 3, **caractérisée en ce que** la matière en polymères (8) s'étend en outre dans un second espace (8b) compris entre le tube (3) et la tige (5).

5. Soupape (1) selon la revendication 3 ou 4, **caractérisée en ce que** la matière en polymères (8) comporte un premier orifice (12a) faisant office de passage, le premier orifice (12a) traversant le premier espace (8a) entre la tête (2) et la tige (5).

6. Soupape (1) selon la revendication 4 ou 5, **caractérisée en ce que** la matière en polymères (8) comporte un second orifice (12b) faisant office de passage, le second orifice (12b) traversant le second espace (8b) entre le tube (3) et la tige (5).

7. Soupape (1) selon l'une quelconque des revendications 2 à 6, **caractérisée en ce que** la tige (5) comporte sur une portion de sa circonférence un évidement (13) faisant office de passage.

8. Soupape (1) selon la revendication 7, **caractérisée en ce que** l'évidement (13) s'étend sur la tige (5) sur une hauteur au moins égale à la distance séparant le premier orifice (12a) et le second orifice (12b).

9. Soupape (1) selon l'une quelconque des revendications 6 à 8, **caractérisée en ce qu'**un chemin (14) est ménagé entre la matière polymérique (8) disposée dans le second espace (8b) et le tube (3) au niveau du second orifice (12b).

10. Soupape (1) selon l'une quelconque des revendications 2 à 9, **caractérisée** en que la matière en polymères (8) est choisie parmi les polyuréthanes, les élastomères, les thermoplastiques, les thermodurcissables, les composites chargés ou non..

11. Soupape (1) selon la revendication 1, **caractérisée en ce que** le premier élément est un disque (17) disposé autour de la tige (5) et solidaire du tube (3) et **en ce que** le second élément est un autre disque (16) solidaire de la tige (5) et superposé sur ledit disque (17).

12. Soupape (1) selon la revendication 11, **caractérisée en ce qu'**une membrane poreuse (18) est disposée entre les deux disques (16,17) pour garantir une étanchéité à l'eau de la soupape (1).

13. Soupape (1) selon l'une quelconque des revendications précédentes, comprenant des moyens tels qu'un ressort (15) ou une butée à billes pour empêcher le déplacement axial de la tête (2).

14. Soupape (1) selon l'une quelconque des revendications précédentes, **caractérisée en ce qu'**elle comporte au sein du tube (3) un ressort (10) enroulé autour de la tige (5) et prenant appui à une extrémité sur le premier élément et à une autre extrémité sur une bague (11) disposée autour de la tige (5).

15. Soupape (1) selon la revendication 14, **caractérisée en ce qu'**elle comprend un joint (7) disposé entre la bague (11) et une portée (6) ménagée dans le tube (3).

16. Montre comprenant une boîte (4) formée d'une carrure, d'un fond et d'un verre délimitant un volume étanche dans lequel est monté un mouvement d'horlogerie muni de moyen d'affichage d'une information horaire, **caractérisée en ce qu'**une soupape (1) selon l'une quelconque des revendications 1 à 15 est montée sur la boîte (4).

17. Soupape de sécurité (1) selon l'une des revendications précédentes, **caractérisée en ce que** la soupape comprend des moyens (15) prévenant un déplacement axial relatif des premier et deuxième éléments.

## Patentansprüche

1. Sicherheitsventil (1), umfassend:
- ein Rohr (3), das dazu bestimmt ist, an einem Gehäuse (4) einer tragbaren Uhr befestigt zu werden,
- einen hohlen Kopf (2), der um das Rohr (3) drehbar montiert ist und mit einer Welle (5) versehen ist, die sich in seinem hohlen Abschnitt erstreckt,
- ein erstes Element (8; 16), das in Bezug auf den Kopf (2) fest montiert ist, und
- ein zweites Element (5; 17), das mit dem Kopf (2) fest verbunden ist und in Bezug auf das erste Element beweglich ist,
**dadurch gekennzeichnet, dass** das erste Element und das zweite Element jeweils einen oder mehrere Durchlässe (12, 13) aufweisen, die den Austritt eines Gases ermöglichen, wobei die Drehbewegung des Kopfes (2) eine Verbindung zwischen den Durchlässen (12, 13) des ersten Elements und des zweiten Elements ermöglicht, um im Falle eines Überdrucks im Inneren des Gehäuses (4) das Gas aus dem Inneren des Gehäuses in dessen äußere Umgebung abzulassen, oder umgekehrt eine Änderung der Ausrichtung der Durchlässe (12, 13) des ersten Elements und des zweiten Elements ermöglicht, um das Entweichen des Gases zu verhindern.

2. Ventil (1) nach Anspruch 1, **dadurch gekennzeichnet, dass** das erste Element ein Polymerwerkstoff (8) ist, der im Inneren des hohlen Kopfes (2) angeordnet ist, und dass das zweite Element die Welle (5) ist.

3. Ventil (1) nach Anspruch 2, **dadurch gekennzeichnet, dass** der Polymerwerkstoff (8) einen ersten Raum (8a) zwischen einem Ende des Rohrs (3), dem Kopf (2) und der Welle (5) ausfüllt.

4. Ventil (1) nach Anspruch 2 oder 3, **dadurch gekennzeichnet, dass** sich der Polymerwerkstoff (8) ferner in einen zweiten Raum (8b) zwischen dem Rohr (3) und der Welle (5) erstreckt.

5. Ventil (1) nach Anspruch 3 oder 4, **dadurch gekennzeichnet, dass** der Polymerwerkstoff (8) eine erste Öffnung (12a), die als Durchlass dient, aufweist, wobei die erste Öffnung (12a) durch den ersten Raum (8a) zwischen dem Kopf (2) und der Welle (5) verläuft.

6. Ventil (1) nach Anspruch 4 oder 5, **dadurch gekennzeichnet, dass** der Polymerwerkstoff (8) eine zweite Öffnung (12b), die als Durchlass dient, aufweist, wobei die zweite Öffnung (12b) durch den zweiten Raum (8b) zwischen dem Rohr (3) und der Welle (5) verläuft.

7. Ventil (1) nach einem der Ansprüche 2 bis 6, **dadurch gekennzeichnet, dass** die Welle (5) auf einem Abschnitt ihres Umfangs eine Aussparung (13) aufweist, die als Durchlass dient.

8. Ventil (1) nach Anspruch 7, **dadurch gekennzeichnet, dass** sich die Aussparung (13) an der Welle (5) auf einer Höhe erstreckt, die mindestens gleich dem Abstand ist, der die erste Öffnung (12a) von der zweiten Öffnung (12b) trennt.

9. Ventil (1) nach einem der Ansprüche 6 bis 8, **dadurch gekennzeichnet, dass** zwischen dem Polymerwerkstoff (8), der in dem zweiten Raum (8b) angeordnet ist, und dem Rohr (3) auf Höhe der zweiten Öffnung (12b) ein Pfad (14) ausgebildet ist.

10. Ventil (1) nach einem der Ansprüche 2 bis 9, **dadurch gekennzeichnet, dass** der Polymerwerkstoff (8) aus Polyurethanen, Elastomeren, Thermoplasten, Duroplasten sowie beladenen oder nicht beladenen Verbundwerkstoffen gewählt ist.

11. Ventil (1) nach Anspruch 1, **dadurch gekennzeichnet, dass** das erste Element eine Scheibe (17) ist, die um die Welle (5) angeordnet und mit dem Rohr (3) fest verbunden ist, und dass das zweite Element eine weitere Scheibe (16) ist, die mit der Welle (5) fest verbunden ist und der ersten Scheibe (17) überlagert ist.

12. Ventil (1) nach Anspruch 11, **dadurch gekennzeichnet, dass** zwischen den beiden Scheiben (16, 17) eine poröse Membran (18) angeordnet ist, um die Wasserdichtigkeit des Ventils (1) zu gewährleisten.

13. Ventil (1) nach einem der vorhergehenden Ansprüche, umfassend Mittel wie etwa eine Feder (15) oder einen Kugelanschlag, um die axiale Verschiebung des Kopfes (2) zu verhindern.

14. Ventil (1) nach einem der vorhergehenden Ansprüche, **dadurch gekennzeichnet, dass** es im Inneren des Rohrs (3) eine Feder (10) aufweist, die um die Welle (5) gewickelt ist und sich mit einem Ende an dem ersten Element und mit dem anderen Ende an einem um die Welle (5) angeordneten Ring (11) abstützt.

15. Ventil (1) nach Anspruch 14, **dadurch gekennzeichnet, dass** es eine Dichtung (7) aufweist, die zwischen dem Ring (11) und einem in dem Rohr (3) ausgesparten Bereich (6) angeordnet ist.

16. Tragbare Uhr, umfassend ein Gehäuse (4), das aus einem Gehäusemittelteil, einem Boden und einem Glas gebildet ist, die ein dichtes Volumen begrenzen, in dem ein Uhrwerk montiert ist, das mit Mitteln zum Anzeigen von Zeitinformationen versehen ist, **dadurch gekennzeichnet, dass** an dem Gehäuse (4) ein Ventil (1) nach einem der Ansprüche 1 bis 15 montiert ist.

17. Sicherheitsventil (1) nach einem der vorhergehenden Ansprüche, **dadurch gekennzeichnet, dass** das Ventil Mittel (15) umfasst, die eine relative axiale Verschiebung des ersten Elements und des zweiten Elements verhindern.

## Claims

1. Safety valve (1) including:
- a tube (3) intended to be fixed to a watch case (4),
- a hollow head (2) mounted for rotation about the tube (3) and provided with a shaft (5) extending into its hollow portion,
- a first element (8; 16) fixedly mounted with respect to the head (2) and
- a second element (5; 17) integral with the head (2) and capable of moving relative to the first element,
**characterized in that** the first element and the second element each include one or more passages (12, 13) allowing gas to flow, the rotational motion of the head (2) allowing the passages (12, 13) of the first element and of the second element to be placed in communication for gas to escape from the interior to the exterior of the case in the event of overpressure inside the case (4) or, conversely, allowing the passages (12, 13) of the first element and of the second element to be moved out of alignment to prevent gas escaping.

2. Valve (1) according to claim 1, **characterized in that** the first element is a polymer material (8) placed inside the hollow head (2) and **in that** the second element is the shaft (5).

3. Valve (1) according to claim 2, **characterized in that** the polymer material (8) fills a first space (8a) comprised between one end of the tube (3), the head (2) and the shaft (5).

4. Valve (1) according to claim 2 or 3, **characterized in that** the polymer material (8) also extends into a second space (8b) comprised between the tube (3) and the shaft (5).

5. Valve (1) according to claim 3 or 4, **characterized in that** the polymer material (8) includes a first orifice (12a) serving as passage, the first orifice (12a) passing through the first space (8a) between the head (2) and the shaft (5).

6. Valve (1) according to claim 4 or 5, **characterized in that** the polymer material (8) includes a second orifice (12b) serving as passage, the second orifice (12b) passing through the second space (8b) between the tube (3) and the shaft (5).

7. Valve (1) according to any of claims 2 to 6, **characterized in that**, on one portion of its circumference, the shaft (5) includes a recess (13) serving as passage.

8. Valve (1) according to claim 7, **characterized in that** the recess (13) extends on the shaft (5) over a height at least equal to the distance separating the first orifice (12a) and the second orifice (12b).

9. Valve (1) according to any of claims 6 to 8, **characterized in that** a path (14) is arranged between the polymer material (8) placed in the second space (8b) and the tube (3) at the second orifice (12b).

10. Valve (1) according to any of claims 2 to 9, **characterized in that** the polymer material (8) is chosen from among polyurethanes, elastomers, thermoplastics, thermosets, reinforced or non-reinforced composites.

11. Valve (1) according to claim 1, **characterized in that** the first element is a disc (17) placed around the shaft (5) and integral with the tube (3) and **in that** the second element is another disc (16) integral with the shaft (5) and superposed on said disc (17).

12. Valve (1) according to claim 11, **characterized in that** a porous membrane (18) is placed between the two discs (16, 17) to ensure that the valve (1) is watertight.

13. Valve (1) according to any of the preceding claims, comprising means such as a spring (15) or a thrust ball bearing to prevent axial movement of the head (2).

14. Valve (1) according to any of the preceding claims, **characterized in that** the valve includes inside the tube (3) a spring (10) wound around the shaft (5) and resting at one end on the first element and, at another end, on a ring (11) placed around the shaft (5).

15. Valve (1) according to claim 14, **characterized in that** the valve includes a gasket (7) placed between the ring (11) and a step portion (6) arranged in the tube (3).

16. Watch including a case (4) formed of a case middle, a back cover and a crystal delimiting a sealed volume in which is mounted a watch movement provided with means for displaying time information, **characterized in that** a valve (1) according to any of claims 1 to 15 is mounted on the case (4).

17. Safety valve (1) according to any of the preceding claims, **characterized in that** the valve includes means (15) preventing a relative axial movement of the first and second elements.
